# EUROPÄISCHE PATENTSCHRIFT

(11) **EP 0 932 488 B1**
(45) Veröffentlichungstag und Bekanntmachung des Hinweises auf die Patenterteilung: **14.05.2003**
(21) Anmeldenummer: 97918838.0
(22) Anmeldetag: 16.09.1997
(51) Int. Cl.: B29C 45/27

(54) **SPRITZGUSSFORM FÜR AUSHÄRTBARE ODER VULKANISIERENDE, ELASTOMERE MATERIALIEN**
INJECTION MOLD FOR CURABLE OR VULCANIZABLE ELASTOMER MATERIALS
MOULE POUR INJECTION DESTINE A DES MATIERES ELASTOMERES DURCISSABLES OU VULCANISABLES

(30) Priorität: 18.09.1996 AT 165296
(43) Veröffentlichungstag der Anmeldung: 04.08.1999
(73) Patentinhaber: Hefner GmbH Elastomere Verarbeitung, 4600 Wels (AT)
(72) Erfinder: HEFNER, Christian, A-4600 Wels (AT); MEINHART, Günter, A-4654 Bad Wimsbach (AT); GANGL, Stefan, A-4050 Traun (AT); ASPALTER, Stefan, A-4061 Pasching (AT)
(74) Vertreter: Hehenberger, Reinhard, Dipl.-Ing.
(86) Internationale Anmeldenummer: AT9700203
(87) Internationale Veröffentlichungsnummer: WO98012038

(56) Entgegenhaltungen:
- EP-A- 0 323 330
- EP-A- 0 783 949
- WO-A-96/21548
- US-A- 3 553 788
- US-A- 3 677 682
- US-A- 3 843 295
- US-A- 5 098 280
- KREHWINKEL T ET AL: "KALTKANALTECHNIK - PRO UND CONTRA " KAUTSCHUK UND GUMMI - KUNSTSTOFFE., Bd. 49, Nr. 9, September 1996, HEIDELBERG DE, Seiten 607-612, XP000630935

## Beschreibung

Die Erfindung betrifft eine Spritzgußform mit den Merkmalen des Oberbegriffes des Anspruchs 1.

Es ist bekannt, durch Wärme vulkanisierende oder verfestigende elastomere Materialien, wie Flüssig-Fest-Silikon, Kautschuk, Gummi usw., einem Formnest über einen Zufuhrkanal zuzuführen, wobei, wenn mehrere Formnester oder ein Formnest mit größeren Dimensionen vorgesehen ist, auch eine Verteilerspinne verwendet werden kann. Die Zufuhrkanäle, durch die das Material in die Formnester unter Drücken von 1000 bis 2000 bar eingespritzt wird, und die Formnester, die von Formplatten begrenzt werden, werden beheizt, so daß sich das Material rasch verfestigt bzw. vulkanisiert. Anschließend werden die Spritzgußteile von den Angußstangen, die sich in den Zufuhrkanälen gebildet haben, abgetrennt. Dies hat den Nachteil, daß es dabei einerseits zu hohen Materialverlusten kommt, da die Angußstangen als Abfall beseitigt werden müssen, und daß es an der Trennstelle zu unerwünschten Ausrissen oder Graten kommen kann.

Um dieses Problem zu lösen, wurde in der EP 162 037 A vorgeschlagen, eine gekühlte Einspritzdüse durch eine beheizte Formplatte zu führen und an der Spitze der Einspritzdüse eine Kanüle anzuformen, deren im Durchmesser gegebenenfalls vergrößerter Ansatzkopf in die Eintrittsöffnung des Formnestes eingepaßt ist. Durch dieses genaue Einpassen der Kanüle in die Eintrittsöffnung soll verhindert werden, daß das unter sehr hohem Druck eingespritzte Material durch einen Spalt zwischen der Kanüle und der Bohrungswand der Eintrittsöffnung in der Formplatte austritt. Da das Material, bedingt durch den hohen Druck, aber bereits durch einen Spalt von wenigen tausendstel Millimetern austreten kann, sind die technischen Anforderungen bei der Herstellung der bekannten Spritzgußform sehr hoch, was sich auf die Herstellungskosten der Spritzgußform nachteilig auswirkt. Außerdem ist die Kanüle sehr filigran und kann leicht beschädigt oder zerstört werden.

Aus der AT 401 253 B ist eine Spritzgußform bekannt, bei der die Einspritzdüse in einer mit dem Formnest in offener Verbindung stehenden Vorkammer im Abstand vom Formnest mündet. Bei dieser Spritzgußform wird zwar der hohe technische Aufwand für das Einpassen der Kanüle in die Eintrittsöffnung des Formnestes vermieden, jedoch ist es schwierig, den Wärmefluß im Bereich des Überganges zwischen Vorkammer und Formnest so zu steuern, daß der Spritzgußteil beim Entformen von dem Pfropfen, der sich in der Vorkammer und in der Eintrittsöffnung bildet, glatt abreißt, damit keine Ausbrüche oder Grate am Spritzgußteil verbleiben. Bei einem neuerlichen Einspritzvorgang wird der Pfropfen dann in das Formnest eingespritzt und, wenn das Formnest wieder gefüllt ist, bildet sich ein neuer Pfropfen, von dem der Spritzgußteil wieder abgetrennt werden muß.

Aus der EP-A-0 323 330 ist eine Einspritzdüse für eine Spritzgußform offenbart. Die Einspritzdüse wird beheizt und die Form gekühlt, es handelt sich somit um ein sogenanntes Heißkanalwerkzeug. Die Einspritzdüse ist in einer Bohrung in einer Formplatte aufgenommen und liegt mit ihrer Spitze an einer Eintrittsbohrung in der Formplatte an, die sich in Strömungsrichtung gesehen zunächst kegelförmig verjüngt und dann in einen zylindrischen Teil übergeht, der in das Formnest mündet. Der Einspritzkanal geht daher kontinuierlich, d.h. ohne Durchmessersprung, vom größeren Druckmesser in der Einspritzdüsenmündung in den kegelförmigen und dann zylindrischen Teil der Eintrittsbohrung über. Im Bereich der Einspritzdüsenmündung und der Eintrittsbohrung sind Flügel angeordnet, die mit der Einspritzdüse verbunden sind, um den Temperaturhaushalt in diesem Bereich steuern zu können.

In der US-A-3 677 682 ist ebenfalls ein Heißkanalwerkzeug beschrieben, das eine Einspritzdüse mit einem Düsenkörper und eine darin verschiebbare Düsenspitze aufweist. Die Düsenspitze wird von Tellerfedern, die zwischen der Düsenspitze und dem Düsenkörper eingespannt sind, im Bereich einer konischen Bohrung, die in das Formnest mündet, gegen die Formplatte gedrückt. Die Düsenspitze mündet direkt in das Formnest.

In Krehwinkel Th. et al. "Kaltkanaltechnik - pro und kontra", KGK Kautschuk Gummi Kunststoffe, 49. Jahrgang, Nr. 9/96, Heidelberg (DE), ist ein Kaltkanalwerkzeug offenbart, das eine Einspritzdüse mit einem Düsenkörper und eine darin verschiebbare Düsenspitze aufweist. Die Düsenspitze wird von Tellerfedern, die zwischen der Düsenspitze und dem Düsenkörper eingespannt sind, im Bereich einer Eintrittsbohrung in das Formnest gegen die Formplatte gedrückt. Die Durchmesser der Spitzenbohrung der Düsenspitze und der Eintrittsbohrung sind im Übergangsbereich, d.h. im Bereich der Einmündung der Spitzenbohrung in die Eintrittsbohrung, gleich groß.

Der Erfindung liegt die Aufgabe zugrunde, eine Spritzgußform der eingangs genannten Gattung zu schaffen, welche die Nachteile des Standes der Technik nicht aufweist.

Gelöst wird diese Aufgabe bei einer gattungsgemäßen Vorrichtung durch die Merkmale des kennzeichnenden Teils der Anspruches 1.

Die erfindungsgemäße Spritzgußform weist gegenüber der EP 162 037 A den Vorteil auf, daß keine Kanüle verwendet werden muß, die unter hohem technischem Aufwand in die Eintrittsöffnung des Formnestes eingepaßt werden muß.

Gegenüber der AT 401 253 B wird, abgesehen von der Vermeidung des oben genannten Nachteiles, der Vorteil erzielt, daß das Wechseln der Einspritzdüse einfacher durchgeführt werden kann, da der Ringraum hinter der Mündung der Einspritzdüse nicht mit Material gefüllt ist, so daß sich beim Wechseln und Reinigen der Einspritzdüse keine Probleme ergeben.

Bei der erfindungsgemäßen Spritzgußform wird durch die Kraft, welche die Einspritzdüse gegen die Formplatte drückt, eine ausreichend hohe Kraft aufgebracht, um die Dichtung gegenüber dem Ringraum zwischen der Düsenspitze und der Formplatte zu gewährleisten.

Wenn bevorzugt vorgesehen ist, daß die Einspritzdüse und/oder deren Düsenspitze achsial verschiebbar gelagert sind, dann wird auch auf einfache Weise gewährleistet, daß, wenn es auf Grund von Temperaturschwankungen der Formplatte und/oder der Einspritzdüse zu Längenänderungen kommt, welche die exakte Positionierung der Düsenspitze im Bereich der Eintrittsöffnung bzw. die Abdichtung zwischen der Düsenspitze und der Formplatte verschlechtern könnten, diese durch die Verschiebbarkeit ausgeglichen werden und die Einspritzdüse und insbesondere deren Düsenspitze mit im wesentlichen konstanter Kraft ständig gegen die Formplatte gedrückt wird.

Ein weiterer Vorteil, der sich ergibt, ist der, daß Maßabweichungen bei der Herstellung der Einspritzdüse und der Formplatte ausgeglichen werden können, wodurch sich die Herstellung der erfindungsgemäßen Spritzgußform vereinfachen und verbilligen läßt.

Eine bevorzugte Ausführungsform der Erfindung ist dadurch gekennzeichnet, daß die Einspritzdüse bzw. deren Düsenspitze durch die Kraft einer Feder gegen die Formplatte gedrückt wird. In einer weiters bevorzugten Ausführungsform ist die Feder eine Tellerfeder. Es ist aber auch jede andere Art einer Feder oder federartigen Einrichtung möglich, die die Einspritzdüse im Bereich der Düsenspitze mit einer Kraft, die bevorzugt permanent und im wesentlichen konstant ist, gegen die Formplatte drückt, so daß eine ausreichende Abdichtung gewährleistet ist.

In der Praxis kommen häufig von der Einspritzdüse abnehmbare Verschleißspitzen zum Einsatz, um die Spritzgußform auf andere aushärtbare oder vulkanisierende, elastomere Materialien umzurüsten.

Bei derartigen Ausführungsformen ist bei der Erfindung bevorzugt, daß die Feder zwischen dem Düsenkörper der Einspritzdüse und der Verschleißspitze angeordnet ist und daß die Verschleißspitze axial verschiebbar im Düsenkörper gelagert ist.

Die Feder stützt sich dabei einerseits am Düsenkörper und anderseits an der Verschleißspitze ab und drückt letztere gegen die Formplatte im Bereich der Eintrittsbohrung.

Weitere Merkmale und Vorteile der Erfindung ergeben sich aus den übrigen Unteransprüchen und der nachfolgenden Beschreibung von Ausführungsbeispielen der Erfindung unter Bezugnahme auf die Zeichnungen.

Es zeigen die
Fig. 1 eine Ausführungsform einer erfindungsgemäßen Spritzgußform, wobei in
Fig. 2 in vergrößertem Maßstab eine erste Ausführungsform, bei der die Düsenspitze und die Anlagefläche an der Formplatte abgerundet sind,
Fig. 3 eine Ausführungsform, bei der eine ebene Anlagefläche zwischen der Düsenspitze und der Formplatte im rechten Winkel zur Längsachse der Einspritzdüse liegt und
Fig. 4 eine Ausführungsform, bei der die Anlagefläche zwischen der Formplatte und der Düsenspitze kegelförmig ausgebildet ist, dargestellt ist,
Fig. 5 eine alternative Form der Lagerung der Düsenspitze im Düsenkörper und
Fig. 6 eine weitere Ausführungsform einer Einspritzdüse.

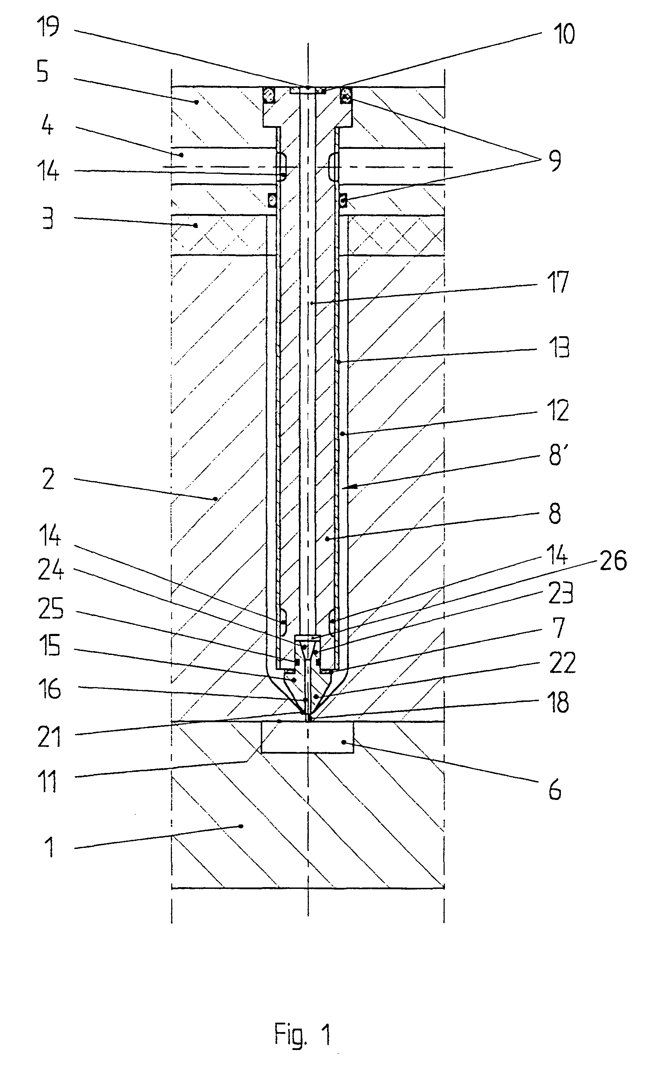

Allen in den Fig. 1 bis 6 beispielhaft dargestellten Ausführungsformen von erfindungsgemäßen Spritzgußformen ist gemeinsam, daß sie zwei Formplatten 1 und 2 aufweisen, die ein Formnest 6 umschließen und beheizt werden. An der Rückseite der Formplatte 2 ist eine Isolierplatte 3 vorgesehen. An die Isolierplatte 3 schließt eine Kühlplatte 5 an, in der eine Einspritzdüse 8' gelagert ist. Die Einspritzdüse 8' ragt durch die Isolierplatte 3 und die Formplatte 2 bis zum Formnest 6 und liegt mit einer Düsenspitze 22 an einer Anlagefläche 21 im Bereich einer Eintrittsbohrung 18 für das einzuspritzende Material an.

Die Einspritzdüse 8' weist einen Düsenkörper 8 auf, über den eine Hülse 13 geschoben ist, die Kühlkanäle 14 nach außen abschließt, die an der Außenwand des Düsenkörpers 8 vorgesehen sind. Die Kühlkanäle 14 stehen mit Bohrungen 4 in der Kühlplatte 5 in Verbindung, durch welche Kühlflüssigkeit zu- bzw. abgeführt wird.

Um einen Austritt von Kühlflüssigkeit zu verhindern, sind im Bereich der Kühlplatte 5 zwei Dichtungsringe 9 vorgesehen, welche die Einspritzdüse 8' gegenüber der Kühlplatte 5 abdichten. Um einen Austritt von Material im Bereich des Anschlusses 19 der Einspritzdüse zu vermeiden, ist in Fig. 1 ein Dichtring 10 vorgesehen.

Am dem Formnest 6 zugewandten Ende ist bei den Ausführungsformen von Fig. 1 bis 5 am Düsenkörper 8 eine Verschleißspitze 15 in axialer Richtung verschiebbar gelagert. Hierzu ist an der Verschleißspitze 15 ein zylinderförmiger Führungsteil 23 angeordnet, der in einer zylindrischen Bohrung 26 im Düsenkörper 8 axial verschiebbar aufgenommen ist. In diesem zylinderförmigen Führungsteil 23 ist ein Düsenkegel 24 angeordnet, der den Übergang zwischen einer Einspritzbohrung 17 und der Bohrung 26 mit größerem Durchmesser im Düsenkörper 8 zu einer Spitzenbohrung 16 mit kleinerem Durchmesser in der Verschleißspitze 15 bildet. Um einen Austritt von einzuspritzendem Material durch den Spalt zwischen der Wand der Bohrung 26 im Düsenkörper 8 und dem Führungsteil 23 zu verhindern, was insbesondere bei dünnflüssigem Einspritzmaterial auftreten könnte, ist an der Mantelfläche des Führungsteiles 23 eine Ringnut vorgesehen, in die ein O-Ring 25 eingelegt ist.

Zwischen der Stirnfläche des Düsenkörpers 8 und einer Schulter an der Verschleißspitze 15 ist eine Tellerfeder 7 angeordnet, welche die Verschleißspitze 15 ständig gegen die Anlagefläche 21 an der Formplatte 2 drückt. An Stelle einer Tellerfeder 7 kann natürlich auch jedes beliebige andere Federelement eingesetzt werden, das diesen Zweck erfüllt.

Durch die Tellerfeder 7 wird die Düsenspitze 22 der Verschleißspitze 15 ständig gegen die Anlagefläche 21 im Bereich der Eintrittsbohrung 18 gedrückt, wodurch die Eintrittsbohrung 18 gegenüber einem nach hinten anschließenden Ringraum 12 abgedichtet ist, der zwischen der Isolierplatte 3 und der Formplatte 2 sowie der Einspritzdüse 8' zu Isolierzwecken vorgesehen ist.

Die Form der Anlage zwischen der Düsenspitze 22 und der Anlagefläche 21 kann auf verschiedene Weisen ausgeführt sein.

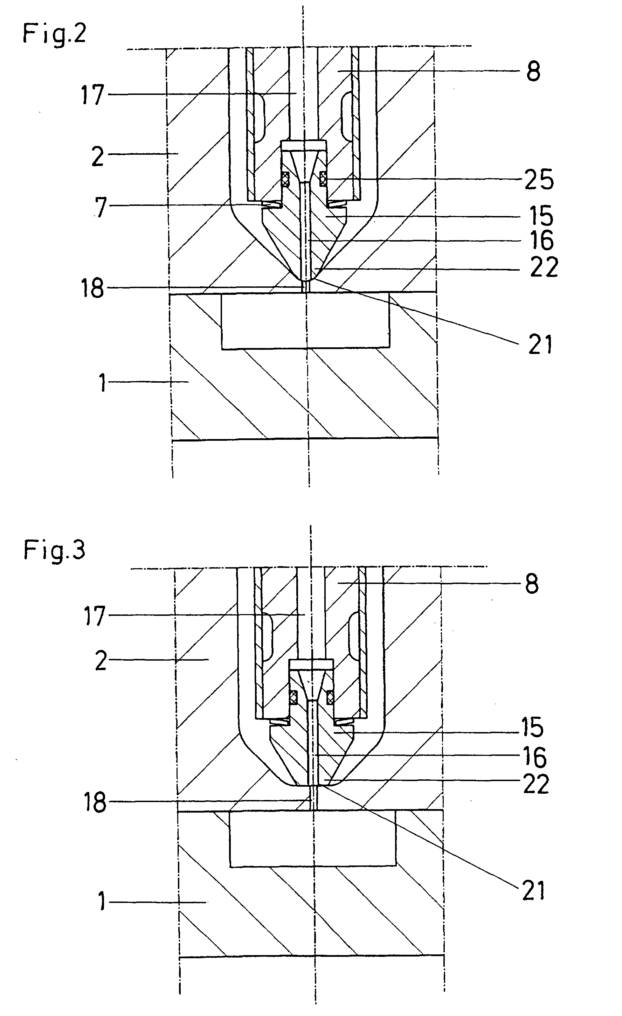

In Fig. 1 und in vergrößertem Maßstab in Fig. 2 beispielsweise ist eine Ausführungsform dargestellt, bei welcher sowohl die Düsenspitze 22 als auch die Anlagefläche 21 vorzugsweise kugelkalottenförmig mit gleichem Krümmungsradius abgerundet ausgebildet sind.

In Fig. 3 wiederum ist eine Ausführungsform dargestellt, bei welcher die Stirnfläche der Düsenspitze 22 und die Anlagefläche 21 eben und im rechten Winkel zur Längsachse der Einspritzdüse 8' ausgerichtet sind.

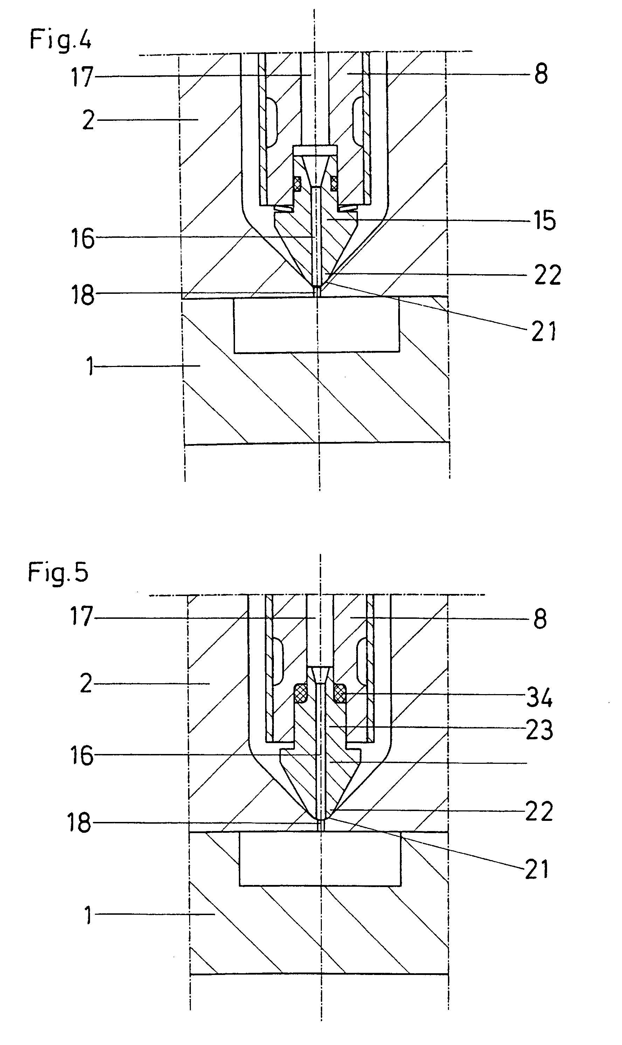

In Fig. 4 ist schließlich eine Ausführungsform dargestellt, bei welcher die Anlagefläche 21 und die Düsenspitze 22 kegelförmig ausgebildet sind.

Den Ausführungsformen gemäß Fig. 2 und Fig. 4 ist gemeinsam, daß sich die Düsenspitze 22 selbsttätig an der Formplatte 2 im Bereich der Eintrittsbohrung 18 zentriert, so daß es nicht zu einem seitlichen Versatz zwischen Düsenmündung und Eintrittsbohrung 18 kommen kann.

Anstatt der Ausführungsformen mit einer flächigen Berührung zwischen der Düsenspitze 22 und der Formplatte 2 sind aber auch Ausführungsformen denkbar, bei denen eine im wesentlichen linienförmige Berührung vorliegt, z.B. in Form einer abgerundeten Düsenspitze 22 und einer kegelförmigen Anlagefläche 21.

Bei alternativen, in den Zeichnungen ebenfalls nicht dargestellten Ausführungsformen kann auch vorgesehen sein, daß die Düsenspitze 22 kegelförmig und die Anlagefläche 21 der Formplatte 2 nach innen, d.h. zur Düsenspitze 21 hin, gewölbt abgerundet ist.

In Fig. 5 ist eine alternative Ausführungsform der Erfindung dargestellt, bei der die Feder 7 durch einen federelastischen Dichtungsring 34 ersetzt ist. Dieser Dichtungsring 34 drückt die Verschleißspitze 15 ständig gegen die Anlagefläche 21 und schafft gleichzeitig auch eine Abdichtung zwischen dem Führungsteil 23, der in diesem Fall noch in die Einspritzbohrung 17 hinein verlängert ist, und dem Düsenkörper 8.

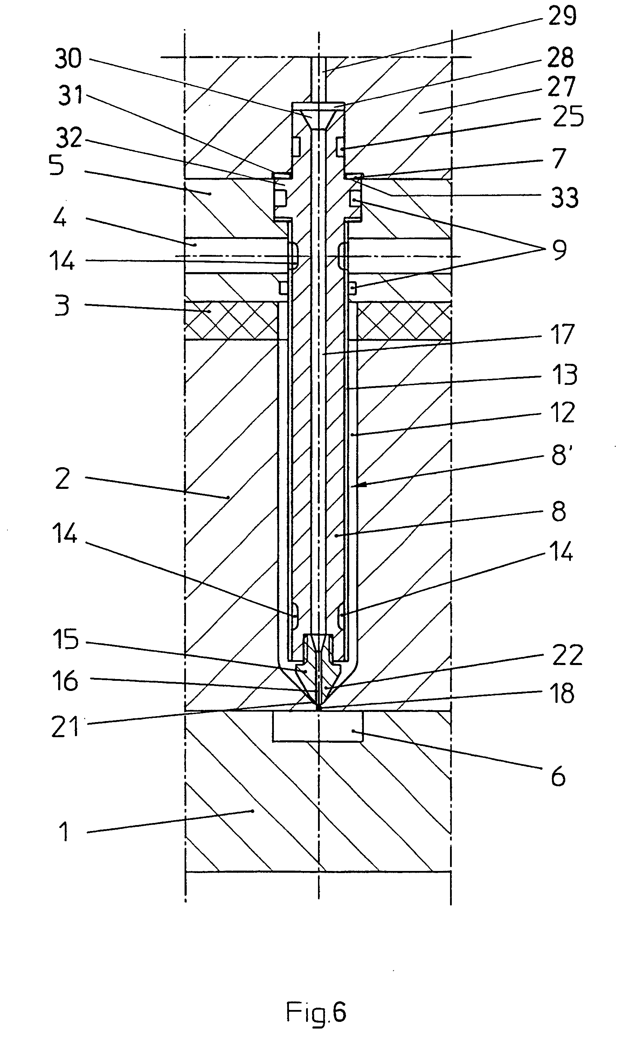

Eine weitere alternative Ausführungsform der Erfindung ist in Fig. 6 dargestellt, bei der die gesamte Einspritzdüse 8' in der Kühlplatte 5 und die Formplatte 2 verschiebbar gelagert und durch eine Feder 7 zum Formnest 6 hin gedrückt wird, die im rückwärtigen Bereich der Einspritzdüse 8' angeordnet ist. Bei dieser Ausführungsform ist die Verschleißspitze 15 in den Düsenkörper 8 eingeschraubt oder kann überhaupt mit diesem einstückig ausgeführt sein.

Hinter der Kühlplatte 5 ist in diesem Fall noch eine Halteplatte 27 angeordnet, in der das hintere Ende der Einspritzdüse 8' in einer Bohrung 28 verschiebbar aufgenommen ist. Das Einspritzmaterial wird der Einspritzbohrung 17 über einen Zufuhrkanal 29, die Bohrung 28 und eine trichterförmige Erweiterung 30 zugeführt. Zur Abdichtung des Düsenkörpers 8' gegenüber der Halteplatte 27 ist wiederum ein Dichtungsring 25 vorgesehen.

Um die permanente Kraft, welche die Einspritzdüse 8' gegen die Anlagefläche 21 an die Eintrittsbohrung 18 drückt, aufzubringen, ist wieder eine Tellerfeder 7 vorgesehen, die in einer ringförmigen Vertiefung 31 der Halteplatte 27 aufgenommen ist und sich gegen diese abstützt. Der Halteplatte 27 gegenüberliegend ist am Düsenkörper 8 ein verbreiterter Ansatz 32 vorgesehen, der eine Stützfläche 33 bildet, gegen die sich die Tellerfeder ebenfalls abstützt. Die Einspritzdüse 8' wird daher, da sie achsial verschiebbar ist, durch die Tellerfeder 7 mit permanenter Kraft gegen die Anlagefläche 21 an der Eintrittsöffnung 18 gedrückt.

Wie schon bei der Ausführungsform von Fig. 1 kann die Gestaltung der Düsenspitze 22 und der Anlagefläche 21 auf beliebige Weise und insbesondere wie in den Fig. 2 bis 4 dargestellt ausgeführt sein.

Bei allen in den Zeichnungen dargestellten Ausführungsformen mündet die Einspritzdüse 8' im Abstand vom Formnest 6 und der Durchmesser der Spitzenbohrung 16 ist größer als der Durchmesser der Eintrittsbohrung 18, um einen geringfügigen seitlichen Versatz der Düsenspitze 22 gegenüber der Eintrittsbohrung 18 ausgleichen zu können, was insbesondere bei der Ausführungsform von Fig. 3 von Vorteil ist.

Bei der erfindungsgemäßen Spritzgußform können bei größeren Dimensionen oder komplizierterer Geometrie des Formnestes auch mehr als eine Einspritzdüse bei einem Formnest vorgesehen sein.

## Patentansprüche

1. Spritzgußform der Kaltkanaltechnik für durch Wärme aushärtbare oder vulkanisierende, elastomere Materialien mit einem von beheizten Formplatten (1, 2) begrenzten Formnest (6) und mit einer Einspritzdüse (8') mit einer Düsenspitze (22) mit einer Spitzenbohrung (16), die eine niedrigere Temperatur als die Formplatten (1, 2) aufweist und die im Bereich des Formnestes (6) an einer Eintrittsbohrung (18) des Formnestes (6) mündet, die in einer der genannten Formplatten (2) vorgesehen ist, wobei die Düsenspitze (22) unter der Wirkung einer sie in Richtung zum Formnest (6) hin belastenden Kraft an der Formplatte (2) anliegt, **dadurch gekennzeichnet, daß** die Spitzenbohrung (16) der Einspritzdüse (8') im Bereich der Einmündung in die Eintrittsbohrung (18) einen größeren Durchmesser als die Eintrittsbohrung (18) aufweist.

2. Spritzgußform nach Anspruch 1, **dadurch gekennzeichnet, daß** die Einspritzdüse (8') bzw. deren Düsenspitze (22) axial verschiebbar gelagert sind.

3. Spritzgußform nach Anspruch 1 oder 2, **dadurch gekennzeichnet, daß** die Düsenspitze (22) im Bereich neben bzw. nahe der Eintrittsbohrung (18) an der Formplatte (2) anliegt.

4. Spritzgußform nach einem der Ansprüche 1 bis 3, **dadurch gekennzeichnet, daß** die Einspritzdüse (8') und/oder deren Düsenspitze (22) durch die Kraft einer Feder (7, 34) gegen die Formplatte (2) gedrückt wird.

5. Spritzgußform nach Anspruch 4, **dadurch gekennzeichnet, daß** die Feder (7) eine Tellerfeder ist.

6. Spritzgußform nach einen der Ansprüche 1 bis 5, **dadurch gekennzeichnet, daß** die Einspritzdüse (8') eine abnehmbare Verschleißspitze (15) aufweist, an der die Düsenspitze (22) angeordnet ist.

7. Spritzgußform nach einem der Ansprüche 4 und 6, **dadurch gekennzeichnet, daß** die Feder (7) zwischen dem Düsenkörper (8) der Einspritzdüse (8') und der Verschleißspitze (15) angeordnet ist und daß die Verschleißspitze (15) axial verschiebbar im Düsenkörper (8) gelagert ist.

8. Spritzgußform nach Anspruch 7, **dadurch gekennzeichnet, daß** die Verschleißspitze (15) einen zylinderförmigen Führungsteil (23) aufweist, der in einer zylindrischen Bohrung (26) im Düsenkörper (8) axial verschiebbar aufgenommen ist.

9. Spritzgußform nach Anspruch 8, **dadurch gekennzeichnet, daß** der Spalt zwischen der Wand der Bohrung (26) im Düsenkörper (8) und dem Führungsteil (23) durch einen Dichtungsring (25) abgedichtet ist, der bevorzugt in einer Ringnut im Führungsteil (23) aufgenommen ist.

10. Spritzgußform nach Anspruch 4, **dadurch gekennzeichnet, daß** am Düsenkörper (8) der Einspritzdüse (8') eine Stützfläche (33) vorgesehen ist, gegen die sich die Feder (7) abstützt.

11. Spritzgußform nach einem der Ansprüche 1 bis 10, **dadurch gekennzeichnet, daß** eine Anlagefläche (21) für die Düsenspitze (22) an der Formplatte (2) und die der Anlagefläche (21) zugewandte Fläche der Düsenspitze (22) eben sind und im rechten Winkel zur Längsachse der Einspritzdüse (8') liegen.

12. Spritzgußform nach einem der Ansprüche 1 bis 10, **dadurch gekennzeichnet, daß** die Düsenspitze (22) und eine Anlagefläche (21) für die Düsenspitze (22) an der Formplatte (2) kongruent abgerundet ausgebildet sind.

13. Spritzgußform nach einem der Ansprüche 1 bis 10, **dadurch gekennzeichnet, daß** die Düsenspitze (22) und eine Anlagefläche (21) für die Düsenspitze (22) an der Formplatte (2) kegelförmig ausgebildet sind.

14. Spritzgußform nach einem der Ansprüche 1 bis 13, **dadurch gekennzeichnet, daß** die Einspritzdüse (8')im Abstand vom Formnest (6) mündet.

## Claims

1. An injection mould using the cold channel technique, for elastomeric materials which can be cured or vulcanised by heat, with a die cavity (6) bounded by heated die plates (1, 2) and with an injection nozzle (8') with a nozzle tip (22) with a tip bore (16), which has a lower temperature than the die plates (1, 2) and opens in the region of the die cavity (6) in an inlet bore (18) of the die cavity (6), which bore is provided in one of the said die plates (2), wherein the injection tip (22) bears on the die plate (2) under the action of a force biasing it in the direction towards the die cavity (6), **characterized in that** the tip bore (16) of the injection nozzle (8') has a greater diameter than the inlet bore (18) in the region of the opening into the inlet bore (18).

2. An injection mould according to claim 1, **characterized in that** the injection nozzle (8') or its injection tip (22) is mounted in axially movable manner.

3. An injection mould according to claim 1 or 2, **characterized in that** the nozzle tip (22) bears on the die plate (2) in the region next to or near to the inlet bore (18).

4. An injection mould according to any of claims 1 to 3, **characterized in that** the injection nozzle (8') and/or its nozzle tip (22) is pressed against the die plate (2) by the force of a spring (7, 34).

5. An injection mould according to claim 4, **characterized in that** the spring (7) is a disc spring.

6. An injection mould according to any of claims 1 to 5, **characterized in that** the injection nozzle (8') comprises a removable wear tip (15), on which the nozzle tip (22) is disposed.

7. An injection mould according to either of claims 4 and 6, **characterized in that** the spring (7) is arranged between nozzle body (8) of the injection nozzle (8') and the wear tip (15) and **in that** the wear tip (15) is mounted axially slidably in the nozzle body (8).

8. An injection mould according to claim 7, **characterized in that** the wear tip (15) comprises a cylindrical guide part (23) which is received axially slidably in a cylindrical bore (26) in the nozzle body (8).

9. An injection mould according to claim 8, **characterized in that** the gap between the wall of the bore (26) in the nozzle body (8) and the guide part (23) is sealed by a scating ring (25), which is preferably received in an annular groove in the guide part (23).

10. An injection mould according to claim 4, **characterized in that** an abutment surface (33), against which the spring (7) bears, is provided on the nozzle body (8). of the injection nozzle (8').

11. An injection mould according to any of claims 1 to 10, **characterized in that** a seating surface (21) for the nozzle tip (22) on the die plate (2) and the surface of the nozzle tip (22) facing the seating surface (21) are flat and lie at a right angle to the longitudinal axis of the injection nozzle (8').

12. An injection mould according to any of claims 1 to 10, **characterized in that** the nozzle tip (22) and a seating surface (21) for the nozzle tip (22) on the die plate (2) are of congruently rounded form.

13. An injection mould according to any of claims 1 to 10, **characterized in that** the nozzle tip (22) and a seating surface (21) for the nozzle tip (22) on the die plate (2) are of conical form.

14. An injection mould according to any of claims 1 to 13, **characterized in that** the injection nozzle (8') opens with a spacing from the die cavity (6).

## Revendications

1. Moule pour le moulage par injection selon la technique dite à canal froid, pour des matériaux élastomères thermodurcissables ou vulcanisables à chaud, comprenant une cavité de moule (6) délimitée par des plaques de moule (1, 2) chauffées et une buse d'injection (8'), avec un nez de buse (22) pourvu d'un trou (16), qui est à une température inférieure à celle des plaques de moule (1, 2) et qui, dans la région de la cavité de moule (6), débouche dans un orifice d'entrée (18) de la cavité de moule (6), prévu dans l'une desdites plaque moule (2), le nez de buse (22) étant appliqué contre la plaque de moule (2) par l'action d'une force qui agit en direction de la cavité de moule (6), **caractérisé en ce que** le trou (16) dans le nez de la buse d'injection (8'), dans la région du débouché dans l'orifice d'entrée (18), présente un diamètre supérieur à celui de l'orifice d'entrée (18).

2. Moule de moulage par injection selon la revendication 1, **caractérisé en ce que** la buse d'injection (8') ou le nez (22) de celle-ci est monté coulissant dans la direction axiale.

3. Moule de moulage par injection selon la revendication 1 ou 2, **caractérisé en ce que** le nez (22) de la buse d'injection, dans la zone contiguë ou voisine de l'orifice d'entrée (18), est appliqué contre la plaque de moule (2).

4. Moule de moulage par injection selon une des revendications 1 à 3, **caractérisé en ce que** la buse d'injection (8') et/ou le nez (22) de celle-ci est pressé contre la plaque de moule (2) par la force d'un ressort (7, 34).

5. Moule de moulage par injection selon la revendication 4, **caractérisé en ce que** le ressort (7) est une rondelle-ressort.

6. Moule de moulage par injection selon une des revendications 1 à 5, **caractérisé en ce que** la buse d'injection (8') présente une pièce d'usure d'extrémité (15) sur laquelle le nez de buse (22) est disposé.

7. Moule de moulage par injection selon une des revendications 4 et 6, **caractérisé en ce que** le ressort (7) est disposé entre le corps (8) de la buse d'injection (8') et la pièce d'usure d'extrémité (15) et **en ce que** la pièce d'usure d'extrémité (15) est montée coulissante dans la direction axiale dans le corps de buse (8).

8. Moule de moulage par injection selon la revendication 7, **caractérisé en ce que** la pièce d'usure d'extrémité (15) comporte une partie de guidage (23) cylindrique, qui est montée coulissante dans la direction axiale dans le corps de buse (8).

9. Moule de moulage par injection selon la revendication 8, **caractérisé en ce que** l'espace entre la paroi du trou (26) dans le corps de buse (8) et la partie de guidage (23) est étanché par un joint d'étanchéité (25) qui, de préférence, est monté dans une gorge annulaire dans la partie de guidage (23).

10. Moule de moulage par injection selon la revendication 4, **caractérisé en ce que** sur le corps (8) de la buse d'injection (8') est prévue une surface d'appui (33) sur laquelle le ressort (7) prend appui.

11. Moule de moulage par injection selon une des revendications 1 à 10, **caractérisé en ce qu'**une surface de contact (21) pour le nez de buse (22) sur la plaque de moule (2) et la surface du nez de buse (22) tournée vers la surface de contact (21) sont planes et sont disposées à angle droit par rapport à l'axe longitudinal de la buse d'injection (8').

12. Moule de moulage par injection selon une des revendications 1 à 10, **caractérisé en ce que** le nez de buse (22) et une surface de contact (21) pour le nez de buse (22) sur la plaque de moule (2) sont arrondis de manière congruente.

13. Moule de moulage par injection selon une des revendications 1 à 10, **caractérisé en ce que** le nez de buse (22) et une surface de contact (21) pour le nez de buse (22) sur la plaque de moule (2) sont conformés en cône.

14. Moule de moulage par injection selon une des revendications 1 à 13, **caractérisé en ce que** la buse d'injection (8') débouche à distance de la cavité de moule (6).
